(19) Europäisches Patentamt
European Patent Office
Office européen des brevets

(11) EP 2 631 169 B1

(12) **FASCICULE DE BREVET EUROPEEN**

(45) Date de publication et mention de la délivrance du brevet:
**23.11.2016 Bulletin 2016/47**

(51) Int Cl.:
***B64C 11/18*** *(2006.01)* ***B64C 27/467*** *(2006.01)*

(21) Numéro de dépôt: **13000510.1**

(22) Date de dépôt: **31.01.2013**

(54) **Rotor, aéronef et procédé**

Rotor, Luftfahrzeug und Verfahren

Rotor, aircraft, and method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2012 FR 1200556**

(43) Date de publication de la demande:
**28.08.2013 Bulletin 2013/35**

(73) Titulaire: **Airbus Helicopters**
**13725 Marignane Cedex (FR)**

(72) Inventeurs:
- **Finck, Sébastien**
  **13002 Marseille (FR)**
- **Sudre, Laurent**
  **13330 Pelissanne (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 2 336 022**
**FR-A- 1 134 736**
**GB-A- 191 500 049**
**US-A- 1 949 611**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 631 169 B1

**Description**

La présente invention concerne un rotor silencieux, un aéronef muni d'un tel rotor, et plus particulièrement un rotor arrière d'un hélicoptère. De plus, l'invention concerne un procédé pour obtenir un tel rotor.

L'invention se situe donc dans le domaine technique restreint des rotors d'aéronefs.

Par exemple, un hélicoptère comporte généralement un unique rotor principal entraîné mécaniquement par au moins un moteur, le rotor principal assurant la sustentation et la propulsion de l'hélicoptère.

Ce type d'hélicoptère est alors pourvu d'un rotor arrière qui assure une fonction anticouple afin de compenser le couple créé par la rotation du rotor principal en exerçant une poussée transversale.

De plus, le rotor arrière permet au pilote de contrôler les évolutions en lacet et en virage de l'hélicoptère en exerçant une poussée transversale positive ou négative.

On connaît un rotor arrière non caréné, dénommé « rotor arrière classique » par commodité, remplissant cette fonction. Classiquement, le rotor arrière non caréné est monté latéralement sur une extrémité supérieure de l'empennage ou sur une extrémité de la poutre de queue de l'hélicoptère.

Ce rotor arrière non caréné est couramment utilisé. Néanmoins, il est possible d'implémenter un rotor arrière caréné, connu sous la marque fenestron® par exemple

Le rotor arrière caréné est alors agencé dans une veine ménagée dans la partie inférieure de la dérive verticale de l'empennage d'un hélicoptère, l'axe longitudinal de la veine étant sensiblement perpendiculaire au plan de symétrie vertical de l'hélicoptère.

Par suite, la structure profilée de la dérive verticale de l'hélicoptère entoure ladite veine et donc le rotor arrière, ce qui explique cette dénomination de rotor arrière caréné. On note que cette structure profilée est généralement dénommée « carène » par l'homme du métier.

La structure profilée protège alors le rotor arrière caréné contre les impacts créés par des éléments extérieurs à l'aéronef. De même, elle augmente la sécurité du personnel au sol, en évitant que ce personnel puisse être blessé par le rotor arrière caréné.

La structure profilée qui entoure la veine, dans laquelle est agencé le rotor arrière caréné, empêche une diffusion des bruits vers l'avant, vers le bas et vers l'arrière du giravion, alors qu'un rotor arrière non caréné diffuse du bruit dans toutes les directions.

Classiquement, un rotor caréné comprend une carène définissant une veine. Un rotor muni d'un moyeu portant une pluralité de pales évolue alors en rotation dans cette veine.

Le moyeu est entraîné en rotation par une boîte de transmission fixée à la carène par des barres de maintien en aval du rotor. Ces barres de maintien peuvent être profilées pour représenter des aubes fixes redressant le flux d'air en aval du rotor.

Dès lors, on appelle parfois l'assemblage comprenant ces barres de maintien « stator-redresseur » de flux d'air.

On note que les termes « amont » et « aval » sont définis par rapport au sens de circulation de l'air au travers de la veine.

On comprend que l'on entend par la suite par « rotor caréné » l'ensemble comportant notamment la carène, le rotor en tant que tel, la boîte de transmission de puissance et les aubes présentes en aval des pales.

Le rotor caréné inclut donc notamment la carène et les éléments présents à l'intérieur de la veine définie par cette carène.

Les rotors carénés présentent des caractéristiques fonctionnelles intéressantes.

Toutefois, bien que le bruit émis par un rotor caréné notamment vers l'avant soit minimisé, un tel rotor caréné reste susceptible de générer du bruit.

En effet, le sillage généré par chaque pale du rotor caréné peut être générateur de bruit en impactant les aubes du stator-redresseur.

Parmi l'état de la technique, on connaît le document FR 2 719 549 qui présente un rotor caréné. Ce rotor caréné comporte des pales réparties angulairement selon une modulation azimutale irrégulière donnée par une loi sinusoïdale.

De plus, les aubes du stator-redresseur sont inclinées pour ne pas être disposées radialement afin de minimiser l'interaction d'une pale avec chaque aube.

Le document FR 2 719 552 présente des aubes d'un stator-redresseur. Selon ce document les pattes de fixation du pied et/ ou du bout d'une aube peuvent être inclinées et ou cintrées par rapport à un plan s'étendant selon l'envergure et une corde de chaque aube.

Le document FR 823 433 présente un aéronef muni d'une hélice non carénée et d'ailes de type plan-convexe.

Le document US 7 874 513 présente un aéronef à décollage et atterrissage vertical.

Cet aéronef comprend des rotors carénés munis d'une pluralité de pales. Les pales comportent un bord d'attaque et un bord de fuite en forme de C.

Le document US 2007/201982 présente un ventilateur et ne se situe donc pas dans le domaine technique de l'invention.

Par ailleurs, le sillage généré par une pale d'un rotor est de nature à générer un bruit potentiellement gênant dans le cadre d'un rotor caréné, mais aussi dans le cadre d'un rotor non caréné.

Par exemple, la demanderesse a noté que le sillage d'une pale d'un rotor principal de sustentation d'un giravion peut de manière surprenante impacter une autre pale de ce rotor principal, notamment lors d'une translation du giravion vers l'avant et en descente.

Indépendamment de la nature du rotor, le sillage généré par une pale est donc susceptible d'induire un désagrément acoustique, au moins dans certaines situations.

L'arrière plan technologique inclut aussi les documents FR 1 134 736, EP 2 336 022, US 1 949 611, et GB 00049 A A.D 1915 (FREEMAN NAT HARRIS).

Le document FR 1 134 736 présente une pale muni d'un bord latéral ondulé.

La présente invention a alors pour objet de proposer un rotor pour au moins minimiser le bruit émis par un tel rotor, ce bruit étant provoqué par le sillage généré par les pales de ce rotor. Le rotor selon l'invention est notamment défini par la revendication 1, et un procédé de minimisation du bruit généré est notamment défini par la revendication 14.

Selon l'invention, chaque pale de ce rotor comporte un extrados et un intrados s'étendant transversalement d'un bord d'attaque vers un bord de fuite et en envergure d'une section d'emplanture vers une section d'extrémité libre.

On appelle « longueur d'envergure » la plus courte distance reliant la section d'emplanture à la section d'extrémité libre.

De plus, on rappelle que l'envergure désigne classiquement la longueur radiale maximale d'une pale de rotor mesurée à partir de l'axe de rotation de la pale jusqu'à la section d'extrémité libre de cette pale.

En outre, on rappelle aussi qu'une section de pale est une coupe transversale de la pale par rapport à l'envergure. Cette coupe est délimitée par une courbe dénommée « profil aérodynamique » ou plus simplement « profil »

La pale est notamment remarquable en ce que cette pale comporte en envergure de la section d'emplanture vers la section d'extrémité libre une zone d'emplanture puis une unique zone bombée s'étendant transversalement du bord d'attaque vers le bord de fuite, la zone d'emplanture étant contenue dans un plan principal de rotation, la zone bombée présentant un intrados et un extrados bombés du bord d'attaque vers le bord de fuite et s'éloignant à partir de la zone d'emplanture dudit plan principal selon une direction parallèle à l'axe de rotation de ladite pale et selon un sens opposé à la circulation d'un fluide au travers de la pale jusqu'à un point de courbure maximale puis se rapproche du plan principal.

On entend donc par « zone bombée » une zone déformée pour atteindre un extrémum représenté par un point de courbure maximale. L'expression « zone éloignée » peut aussi être employée pour désigner la zone bombée, cette zone étant éloignée du plan principal contrairement à la zone d'emplanture.

Toute la pale est alors entièrement bombée dans une telle zone bombée. La zone bombée diffère donc beaucoup d'une pale présentant un seul bord latéral ondulé, du type du document FR 1 134 736 par exemple, et permet de résoudre le problème technique posé.

En effet, lors de leur mouvement rotatif, les pales génèrent un sillage tourbillonnaire.

Dans le cadre d'un rotor caréné, la demanderesse a déterminé qu'une interaction aérodynamique entre ce sillage tourbillonnaire d'air provenant des pales et des barres de maintien du stator-redresseur à la carène est potentiellement génératrice de bruit.

Dès lors, en déformant une pale et notamment en bombant l'extrados et l'intrados de sa zone bombée, on peut obtenir une forme cambrée, la zone bombée présentant une flèche selon une direction parallèle à l'axe de rotation du rotor. Cette flèche est de plus dirigée selon un sens allant de l'intrados vers l'extrados et donc du côté opposé au stator-redresseur.

Ainsi, on éloigne la zone bombée de la pale du stator-redresseur et plus particulièrement des barres de maintien, l'intrados de la zone bombée de la pale présentant une concavité en vis-à-vis du stator-redresseur.

L'éloignement de la zone bombée du stator-redresseur comparé à une pale classique permet ainsi de minimiser l'interaction existant entre le sillage tourbillonnaire généré par une pale et le stator-redresseur.

De plus, outre l'augmentation de la distance à parcourir par un sillage tourbillonnaire entre la zone bombée et des barres de maintien, on note que la forme bombée de cette zone bombée accentue la dissipation du sillage tourbillonnaire.

On comprend alors que cette pale génère en rotation un sillage tourbillonnaire disparaissant plus rapidement comparé à une pale classique, ce sillage tourbillonnaire parcourant en outre une distance maximisée par rapport à une pale classique pour atteindre un stator-redresseur.

Par suite, cette pale permet d'éviter un contact entre un stator-redresseur et un sillage tourbillonnaire généré par la pale en rotation, ou permet de minimiser le sillage tourbillonnaire susceptible d'atteindre un tel stator-redresseur le cas échéant.

De même, sur un rotor non caréné tel qu'un rotor de sustentation d'un giravion, la dissipation rapide du sillage générée par une pale selon l'invention minimise l'interaction de ce sillage avec une autre pale du rotor durant un vol d'avancement en descente. Eventuellement, le sillage d'une pale peut ne pas impacter une autre pale.

On note qu'en courbant uniquement la zone bombée d'une pale par rapport à une pale connue, il est possible donc d'obtenir une pale de rotor acoustiquement intéressante, aussi bien pour un rotor caréné que pour un rotor non caréné.

De plus, en n'agissant pas sur la zone d'emplanture, on ne modifie pas les conditions de fixation de cette pale sur un moyeu existant.

De même, il est possible de conserver les conditions d'interface avec une carène dans le cadre d'un rotor caréné, en ne modifiant pas la position de la section d'extrémité par rapport à une pale classique. En n'agissant pas sur la section d'extrémité libre de la pale, on maintient l'effet connu d'entraînement de la pale sur la carène d'un rotor caréné, parfois dénommé « effet de succion aérodynamique ».

Par conséquent, il est possible d'obtenir une pale selon l'invention à partir d'une pale classique en éloignant sa zone bombée selon une direction parallèle à l'axe de rotation de ladite pale pour améliorer les performances acoustiques d'un rotor, sans modifier les conditions d'interface de la pale modifiée avec un moyeu du rotor et voire la carène d'un rotor caréné.

Cette pale peut de plus comporter une ou plusieurs des caractéristiques additionnelles qui suivent pour par exemple optimiser son efficacité.

Par exemple, selon une variante, la zone bombée peut se rapprocher du plan principal sans l'atteindre.

On maximise ainsi le nombre de sections de pale éloignées du plan principal afin notamment de minimiser le bruit d'interaction entre une pale et une aube ou entre une pale et une autre pale.

Selon une variante préférée, la zone bombée s'éloignant à partir de la zone d'emplanture puis se rapprochant dudit plan principal P1, la pale présente à partir du plan principal une zone d'extrémité succédant à la zone bombée, la zone d'extrémité comportant ladite section d'extrémité libre.

La zone d'emplanture et la zone d'extrémité peuvent être agencées dans le plan principal, pour optimiser les performances du rotor notamment dans le cadre d'un rotor caréné.

La zone d'emplanture et la zone d'extrémité sont alors planes.

Il est à noter que la zone d'extrémité peut comporter uniquement la section d'extrémité libre, ou s'étendre en envergure de la zone bombée vers la section d'extrémité libre.

La zone d'extrémité peut aussi présenter une angulation avec le plan principal P1.

Selon un autre aspect, la zone d'emplanture s'étend radialement en envergure de ladite section d'emplanture vers une première section intermédiaire commune à la zone d'emplanture et à la zone bombée. La première section intermédiaire est éventuellement disposée radialement entre la section d'emplanture et une section médiane de la pale située à égale distance de la section d'emplanture et de la section d'extrémité libre.

De même, le cas échéant la zone d'extrémité s'étend radialement en envergure d'une deuxième section intermédiaire commune à la zone d'extrémité et à la zone bombée vers ladite section d'extrémité libre. La deuxième section intermédiaire est éventuellement disposée radialement entre la section d'extrémité libre et une section médiane de la pale située à égale distance de la section d'emplanture et de la section d'extrémité libre.

On comprend que l'on peut déterminer la position des première et deuxième sections intermédiaires de manière à maximiser la zone bombée en envergure, tout en conservant une zone d'emplanture suffisante pour ne pas perturber la fixation à un moyeu et le cas échéant une zone d'extrémité libre suffisante pour ne pas altérer un effet de succion.

Selon un autre aspect, la pale présentant une zone d'extrémité et une pluralité de sections réparties en envergure le long d'une ligne d'empilement de la pale, la portion d'emplanture de la ligne d'empilement située dans la zone d'emplanture et la portion d'extrémité de la ligne d'empilement située dans la zone d'extrémité peuvent être disposées dans ledit plan principal. La portion intermédiaire de la ligne d'empilement située dans la zone bombée est alors bombée pour s'éloigner dudit plan principal selon une direction parallèle à l'axe de rotation de ladite pale.

On note qu'il est possible de définir une ligne d'empilement géométrique de construction sur laquelle est empilée l'ensemble des sections de la pale.

Ainsi, le constructeur définit arbitrairement un point caractéristique de chaque section de la pale, chaque point caractéristique d'une section se trouvant dans la même position par rapport à l'intersection de cette section avec la ligne d'empilement. Chaque section est alors éventuellement orientée par rapport à une ligne de vrillage selon une loi de vrillage.

Par exemple, le constructeur peut décider que le bord d'attaque de chaque section se trouve à une distance prédéterminée de la ligne d'empilement, une distance prédéterminée égale au tiers de la corde de la section par exemple. La forme finale de la pale est alors obtenue en mettant en oeuvre une loi de vrillage visant à orienter angulairement chaque section par rapport à une ligne de vrillage.

Dès lors, la portion intermédiaire de la ligne d'empilement est bombée afin d'éloigner la zone bombée du plan principal, et éventuellement d'un stator-redresseur.

Par exemple, une projection de cette portion intermédiaire sur un plan orthogonal peut avoir la forme d'une fonction spline cubique, ce plan orthogonal étant perpendiculaire au plan principal et passant par un axe de variation de pas de la pale.

Par ailleurs, une projection de la portion d'emplanture et de la portion d'extrémité sur ledit plan orthogonal est éventuellement confondue avec une projection de l'axe de variation de pas de la pale sur ce plan orthogonal.

De plus, la portion intermédiaire de la ligne d'empilement peut s'éloigner de la portion d'emplanture pour atteindre un point de courbure maximale puis se rapproche du plan principal. Le point de courbure maximale se trouve éventuellement dans un plan secondaire en amont dudit plan principal et parallèle au plan principal.

Eventuellement, une projection du point de courbure maximale sur le plan orthogonal est située à une distance radiale de la section d'emplanture comprise entre le quart de la longueur d'envergure de la pale séparant la section d'emplanture de la section d'extrémité libre et les trois-quarts de ladite longueur d'envergure.

Selon un autre aspect, le point de courbure maximale étant situé à une distance verticale du plan principal, cette distance verticale est comprise entre le tiers d'une corde de référence et trois fois cette corde de référence.

Le point de courbure maximal étant contenu dans une section maximale de la pale, la corde de référence peut être la corde de cette section maximale.

Selon l'invention, un rotor est muni d'un moyeu tournant portant une pluralité de pales.

Chaque pale est selon l'invention en étant du type décrit précédemment. Ainsi, chaque pale comporte un extrados et un intrados s'étendant transversalement d'un bord d'attaque vers un bord de fuite et en envergure d'une section d'emplanture vers une section d'extrémité libre, la pale comportant de la section d'emplanture vers la section d'extrémité libre une zone d'emplanture puis une zone bombée, la zone d'emplanture étant contenue dans un plan principal de rotation, la zone bombée présentant un intrados et un extrados bombé s'éloignant à partir de la zone d'emplanture du plan principal selon une direction parallèle à l'axe de rotation de la pale et selon un sens opposé à un sens de circulation d'un fluide au travers du rotor jusqu'à un point de courbure maximale puis se rapproche du plan principal.

Le rotor comporte une carène définissant une veine dans laquelle évoluent les pales, le rotor comprenant un stator-redresseur située en aval des pales, la zone bombée s'éloignant du plan principal pour éloigner le point de courbure maximale du stator-redresseur.

L'invention vise aussi un aéronef qui comporte un tel rotor.

Par ailleurs, l'invention concerne aussi un procédé pour minimiser le bruit émis par un rotor, le rotor comprenant un moyeu tournant portant une pluralité de pales.

Chaque pale comportant un extrados et un intrados s'étendant transversalement d'un bord d'attaque vers un bord de fuite et en envergure d'une section d'emplanture vers une section d'extrémité libre, la pale comportant de la section d'emplanture vers la section d'extrémité libre une zone d'emplanture puis une zone bombée, la zone d'emplanture étant contenue dans un plan principal de rotation, selon le procédé on bombe un intrados et un extrados de la zone bombée selon une direction parallèle à l'axe de rotation de ladite pale et selon un sens opposé à un sens de circulation du fluide au travers du rotor pour éloigner cette zone bombée d'un stator-redresseur afin de minimiser le bruit émis par le rotor.

Eventuellement, chaque zone présentant une pluralité de sections réparties en envergure le long d'une ligne d'empilement, une portion d'emplanture de la ligne d'empilement située dans la zone d'emplanture étant disposée dans le plan principal, une portion intermédiaire de la ligne d'empilement située dans la zone bombée étant bombée, on réalise ladite portion intermédiaire à l'aide d'une fonction spline cubique formée en utilisant au moins trois points de passage, un premier point de passage étant commun à la portion d'emplanture et à la portion intermédiaire.

On peut prendre soin d'éviter des discontinuités en tangence de la portion intermédiaire, de telles discontinuités pouvant générer des tourbillons.

Ainsi, lorsque l'on utilise un nombre pair de points de passage, on peut répartir symétriquement ces points autour d'un plan maximal passant par un point de courbure maximale.

Lorsque l'on utilise un nombre impair de points de passage, on peut placer un point de passage sur le point de courbure maximale à atteindre, puis répartir symétriquement les autres points de passage autour d'un plan maximal passant par le point de courbure maximale.

On peut notamment placer des points de passage à proximité du premier point de passage et d'un deuxième point de passage extrémal afin de lisser au maximum la courbure de la portion intermédiaire de la ligne d'empilement à sa jonction avec la portion d'emplanture.

L'invention et ses avantages apparaîtront avec plus de détails dans le cadre de la description qui suit avec des exemples de réalisation donnés à titre illustratif en référence aux figures annexées qui représentent :

- la figure 1, un vue schématique d'un aéronef,
- la figure 2, une vue tridimensionnelle d'une pale,
- la figure 3, une projection d'une ligne d'empilement dans un plan orthogonal, et
- les figures 4 à 7, des vues présentant des variantes de l'invention.

Les éléments présents dans plusieurs figures distinctes sont affectés d'une seule et même référence.

La figure 1 présente un aéronef 1 muni d'un rotor caréné 5. Ce rotor caréné peut notamment être un fenestron®.

Les éléments de l'aéronef n'appartenant pas au rotor ne sont pas représentés pour ne pas alourdir inutilement la figure 1.

Le rotor caréné 5 comprend une carène 6 définissant une veine. Un ensemble tournant 15 muni d'un moyeu 16 portant une pluralité de pales 20 est ainsi agencé dans la veine 7.

De plus, le rotor caréné 5 comprend un stator-redresseur 10 disposé dans la veine en aval de l'ensemble tournant 15 selon le sens de circulation F du flux d'air au travers du rotor caréné 5.

Un tel stator-redresseur peut inclure d'une part une boîte de transmission de puissance 11 entraînant en rotation l'ensemble tournant 15 autour d'un axe de rotation AXROT, et, d'autre part des barres de maintien 12 pour fixer la boîte de transmission de puissance 11 à la carène. Ces barres de maintien 12 sont généralement profilées pour redresser le flux d'air traversant le rotor caréné en aval de l'ensemble tournant 15, ces barres de maintien 12 étant par suite parfois dénommées « aubes » par l'homme du métier.

Par ailleurs, indépendamment de la nature du rotor 5, les pales 20 du rotor s'étendent en envergure à partir du moyeu 16 d'une section d'emplanture 31 en vis-à-vis du moyeu 16 vers une section d'extrémité libre 41. Sur un rotor caréné, la section d'extrémité libre 41 est donc en vis-à-vis de la carène 6.

De plus, les pales 20 s'étendent en élévation d'un intrados 22 vers un extrados 21 et transversalement d'un bord d'attaque vers un bord de fuite.

Selon le procédé de l'invention, on identifie au moins deux zones distinctes de chaque pale.

Par suite, chaque pale s'étend en envergure du moyeu 16 vers la section d'extrémité libre 41 en passant par une zone dite « zone d'emplanture 30 »contenant la section d'emplanture 31 puis par une zone dite « zone bombée 35 » ou encore « zone déformée ».

Dès lors, soit la zone bombée 35 contient la section d'extrémité libre 41, soit la zone bombée 35 est prolongée par une zone dite « zone d'extrémité 40» incluant la section d'extrémité libre 41.

Dès lors, pour minimiser le bruit émis par le rotor en fonctionnement à savoir lorsque les pales effectuent un mouvement rotatif autour de l'axe de rotation, on bombe l'intrados 22" et l'extrados 21" de la zone bombée 35 selon une direction Z parallèle à l'axe de rotation de ladite pale et selon un sens opposé au sens de circulation F de l'air au travers du rotor.

Ainsi, cette zone bombée 35 s'éloigne du plan principal P1, et le cas échéant dudit stator-redresseur pour atteindre un plan secondaire P3.

Les pales de l'état de la technique évoluent en général en rotation autour d'un axe de rotation AXROT dans un plan dit « plan principal P1 ». Ce plan principal P1 est ainsi parfois appelé « plan de rotation » des pales 20.

A l'inverse, selon l'invention on déforme une zone bombée pour l'éloigner du plan principal P1, et du stator-redresseur 10 sur l'exemple représenté, afin de minimiser le bruit émis par le rotor.

La zone bombée atteint alors un point de courbure maximale situé dans le plan secondaire P3.

A partir du plan secondaire P3, la zone bombée se rapproche du plan principal P1.

Selon la variante de la figure 7, cette zone bombée n'atteint pas le plan principal P1. La zone bombée inclut alors la section d'extrémité libre 41 qui se trouve en amont du plan principal P1.

Par contre, selon d'autres variantes, la zone bombée 35 débouche sur une zone extrémale 40 au niveau du plan principal P1.

Selon la réalisation de la figure 6, la zone bombée décroit linéairement jusqu'au plan principal P1.

Dans cette variante, la zone d'extrémité 40 est limitée à la section d'extrémité libre 41.

Cette variante paraît adaptée à un rotor caréné.

Il en va de même pour la variante de la figure 5 qui se distingue de la variante de la figure 6 par une décroissance non linéaire de la zone bombée jusqu'au plan principal P1

Selon d'autres variantes, la zone d'extrémité 40 peut s'étendre en envergure.

Conformément à la variante de la figure 4, la zone d'extrémité 40 présente une angulation $\alpha$ avec le plan principal.

La section d'extrémité libre 41 atteint alors un quatrième plan P4 en aval du plan principal.

Enfin, selon l'exemple préférée de la figure 1, la zone d'extrémité 40 peut être contenue dans le plan principal P1.

Chaque pale 20 évolue alors en rotation dans un anneau délimité par le plan principal P1 et le plan secondaire P3.

On comprend qu'il est possible de ne pas déformer la zone d'emplanture 30 pour ne pas modifier les conditions d'interface avec le moyeu, et la zone d'extrémité 40 pour ne pas altérer l'effet de succion aérodynamique se produisant entre la carène 6 et la pale 20.

La figure 2 présente une telle pale 20 mettant en oeuvre ce procédé.

La pale 20 présentée s'étend donc en envergure d'une section d'emplanture 31 vers une section d'extrémité libre 41, la longueur d'envergure R correspondant à la distance séparant la section d'emplanture 31 et la section d'extrémité libre 41.

On note qu'un longeron non représenté peut saillir de la section d'emplanture pour être solidarisé à un moyeu 16.

Par ailleurs, la pale s'étend transversalement d'un bord d'attaque 23 vers un bord de fuite 24.

On rappelle que la corde d'une section correspond à la distance séparant le bord d'attaque du bord de fuite de cette section. La figure 2 présente la corde CO de la section d'extrémité libre 41 qui s'étend entre le bord d'attaque BA et le bord de fuite BF de cette section d'extrémité libre 41.

En outre, la pale 20 s'étend en élévation suivant son épaisseur d'un intrados 22 vers un extrados 21. On comprend que l'extrados et l'intrados s'étendent donc chacun transversalement du bord d'attaque 23 de la pale 20 vers le bord de fuite 24.

Afin de minimiser les interactions entre cette pale 20 et des barres de maintien 12 au sein d'un rotor caréné, la pale 20 comporte de la section d'emplanture 31 vers ladite section d'extrémité libre 41 une zone d'emplanture 30 puis une zone bombée 35, voire une zone d'extrémité 40. La zone d'emplanture 30 et la zone d'extrémité 40 sont alors contenues dans un plan principal P1 de rotation selon la variante préférée représentée.

Par contre, la zone bombée 35 présente un intrados 22" et un extrados 21" qui sont bombés pour être éloignés d'un plan principal P1 selon une direction Z parallèle à l'axe de rotation AXROT de la pale.

Par ailleurs, on note que la zone d'emplanture 30 s'étend radialement en envergure de la section d'emplanture 31 vers une première section intermédiaire 32. De même, la zone bombée 35 s'étend radialement en envergure de la première section intermédiaire 32 vers une deuxième section intermédiaire 39, la zone d'extrémité 40 s'étendant radialement en envergure de la deuxième section intermédiaire 39 vers la section d'extrémité libre 41.

Selon la variante, la deuxième section intermédiaire 39 et la section d'extrémité libre 41 peuvent être confondues, et éventuellement agencées dans le plan principal P1.

Pour minimiser le bruit émis par un rotor muni de la pale 20, on peut maximiser la zone bombée au détriment de la zone d'emplanture, et le cas échant de la zone d'extrémité. On comprend néanmoins que ces zones d'emplanture et d'extrémité sont dimensionnées pour garantir l'interfaçage de la pale sur un moyeu, et l'effet de succion de la pale interagissant avec une carène.

Par exemple, la première section intermédiaire 32 est alors disposée radialement entre la section d'emplanture 31 et une section médiane 37 de la pale située à égale distance de la section d'emplanture 31 et de la section d'extrémité libre 41.

A l'inverse, la deuxième section intermédiaire 39 peut être disposée radialement entre la section médiane 37 et la section d'extrémité libre 41.

Selon un autre aspect, pour définir la géométrie de la pale 20, on rappelle qu'un constructeur peut définir une ligne de construction dite « ligne d'empilement 50 ». Le constructeur positionne alors chaque section de cette pale 20 par rapport à la ligne d'empilement 50.

Par exemple, le constructeur peut définir que le bord d'attaque de chaque section doit se situer à une distance prédéterminée de la ligne d'empilement, cette distance pouvant varier suivant l'emplacement en envergure des sections.

La forme finale de la pale est alors obtenue en mettant en oeuvre une loi de vrillage des sections.

Dès lors, la ligne d'empilement 50 de la pale 20 présentée, comporte successivement une portion d'emplanture 55 située dans la zone d'emplanture 30, une portion intermédiaire 60 située dans la zone bombée 35, puis le cas échéant une portion d'extrémité 65 située dans la zone d'extrémité 40.

Par conséquent, la portion d'emplanture 55 et la portion d'extrémité 65 sont éventuellement disposées dans le plan principal P1. Par contre, la portion intermédiaire 60 est bombée pour s'éloigner du plan principal P1 selon une direction parallèle à l'axe de rotation de la pale.

Plus précisément, la portion intermédiaire 60 s'éloigne du plan principal P1 à partir de la portion d'emplanture pour atteindre un point de courbure maximal PCO situé dans le plan secondaire P3. A partir du point de courbure maximal PCO, la portion intermédiaire 60 se rapproche du plan principal P1 pour atteindre éventuellement la portion d'extrémité 65.

On note que le point de courbure maximal PCO se situe dans une section dite « section maximale 36 », cette section maximale représentant la section de la pale 20 la plus éloignée du plan principal selon une direction Z parallèle à l'axe de rotation AXROT. Cette section maximale 36 peut être confondue avec la section médiane 37.

La figure 3 présente la projection 50' d'une ligne d'empilement 50 sur un plan dit « plan orthogonal P2 ». Ce plan orthogonal P2 est perpendiculaire au plan principal P1 et passe par exemple par l'axe de variation de l'angle de pas AXPAS de la pale 20.

Dès lors, une projection orthogonale d'emplanture 55' et une projection orthogonale d'extrémité 65' sur un plan orthogonal P2 respectivement de la portion d'emplanture 55 et de la portion d'extrémité 65 sont éventuellement confondues avec l'axe de variation de pas AXPAS de la pale sur ce plan orthogonal.

Par contre, une projection 60' orthogonale de la portion intermédiaire 60 sur le plan orthogonal P2 a favorablement la forme d'une fonction spline cubique.

Pour définir cette fonction spline cubique durant une phase de conception, le constructeur peut mettre en oeuvre au moins trois points de passage 100.

Le constructeur peut notamment choisir un premier et un deuxième points de passage 100', 100" respectivement communs à la portion d'emplanture et à la portion intermédiaire ainsi qu'à la portion d'extrémité et à la portion intermédiaire.

De plus, lorsque l'on utilise un nombre pair de points de passage 102, on peut répartir symétriquement ces points de passage 102 autour du plan maximal 36 passant par un point de courbure maximal PCO.

Lorsque l'on utilise un nombre impair de points de passage 101, on peut placer un point de passage 101 sur le point de courbure maximale à atteindre, puis répartir symétriquement les autres points de passage 101 autour du plan médian 36.

Par ailleurs, on peut définir la position du point de courbure maximale en envergure à l'aide d'une projection du point de courbure maximale PCO sur le plan orthogonal, cette projection étant dénommée « projection maximale » par commodité.

Ainsi, la projection maximale PCO' du point de courbure maximale PCO sur le plan orthogonal P2 est située à une distance radiale DR de la section d'emplanture 31 comprise entre le quart $\frac{R}{4}$ de la longueur d'envergure R de la pale et les trois-quarts $\frac{3R}{4}$ de ladite longueur d'envergure R.

De plus, on note que le point de courbure maximale PC0 est situé à une distance verticale DV du plan principal P1. Cette distance verticale DV est éventuellement comprise entre le tiers d'une corde de référence CREF et trois fois de cette corde de référence CREF. La corde de référence peut être la corde de la section maximale 36.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention définie par les revendications qui suivent.

## Revendications

1. Rotor (5) comprenant un moyeu (16) tournant portant une pluralité de pales (20), le rotor comportant une carène (6) définissant une veine (7) dans laquelle évoluent lesdites pales (20), ledit rotor comprenant un stator-redresseur (10) situé en aval desdites pales (20), chaque pale (20) comportant un extrados (21) et un intrados (22) s'étendant transversalement d'un bord d'attaque (23) vers un bord de fuite (24) et en envergure d'une section d'emplanture (31) vers une section d'extrémité libre (41),
**caractérisée en ce que** chaque pale (20) comporte en envergure de la section d'emplanture (31) vers ladite section d'extrémité libre (41) une zone d'emplanture (30) puis une unique zone bombée (35) s'étendant transversalement du bord d'attaque (23) vers le bord de fuite (24), ladite zone d'emplanture (30) étant contenue dans un plan principal (P1) de rotation, ladite zone bombée (35) présentant un intrados (22") et un extrados (21") bombés du bord d'attaque (23) vers le bord de fuite (24) et s'éloignant à partir de la zone d'emplanture dudit plan principal (P1) selon une direction (Z) parallèle à l'axe de rotation (AXROT) de ladite pale et selon un sens opposé à un sens de circulation d'un fluide au travers de la pale jusqu'à un point de courbure maximale (PCO) puis se rapproche dudit plan principal (P1), ladite zone bombée s'éloignant du plan principal (P1) pour éloigner ledit point de courbure maximale dudit stator-redresseur (10).

2. Rotor selon la revendication 1,
**caractérisé en ce que**, ladite zone bombée (35) s'éloignant à partir de la zone d'emplanture puis se rapprochant dudit plan principal (P1), chaque pale (20) présente à partir dudit plan principal (P1) une zone d'extrémité (40) succédant à la zone bombée, ladite zone d'extrémité comportant ladite section d'extrémité libre (41).

3. Rotor selon la revendication 2,
**caractérisé en ce que**, ladite zone d'emplanture et ladite zone d'extrémité (40) sont agencées dans ledit plan principal (P1).

4. Rotor selon la revendication 2,
**caractérisé en ce que**, chaque pale (20) présentant une pluralité de sections réparties en envergure le long d'une ligne d'empilement (50) de cette pale (20), une portion d'emplanture (55) de la ligne d'empilement (50) située dans la zone d'emplanture (30) et une portion d'extrémité (65) de la ligne d'empilement (50) située dans la zone d'extrémité (40) sont disposées dans ledit plan principal (P1), une portion intermédiaire (60) de la ligne d'empilement (50) située dans la zone bombée (35) étant bombée pour s'éloigner dudit plan principal (P1) selon une direction parallèle à l'axe de rotation de ladite pale.

5. Rotor selon la revendication 4,
**caractérisé en ce qu'**une projection (60') de ladite portion intermédiaire (60) sur un plan orthogonal (P2) a la forme d'une fonction spline cubique, ce plan orthogonal (P2) étant perpendiculaire au plan principal (P1) et passant par un axe de variation de pas (AXPAS) de la pale.

6. Rotor selon l'une quelconque des revendications 4 à 5,
**caractérisé en ce que**, pour chaque pale, une projection (55', 65') sur un plan orthogonal (P2) de la portion d'emplanture (55) et de la portion d'extrémité (65) sont confondues avec un axe de variation de pas (AXPAS) de la pale sur ce plan orthogonal, ce plan orthogonal (P2) étant perpendiculaire au plan principal (P1) et passant par un axe de variation de pas (AXPAS) de la pale.

7. Rotor selon l'une quelconque des revendications 1 à 6,
**caractérisé en ce que** ledit point de courbure maximale (PCO) se trouve dans un plan secondaire (P3) en amont dudit plan principal (P1) et parallèle au plan principal (P1).

8. Rotor selon la revendication 7,
**caractérisé en ce que**, pour chaque pale, une projection (PCO') du point de courbure maximale (PCO) sur un plan orthogonal (P2) est située à une distance radiale (DR) de ladite section d'emplanture (31) comprise entre le quart de l'envergure (R) de la pale séparant la section d'emplanture (31) de la section d'extrémité libre (41) et les trois-quarts de ladite envergure (R) ce plan orthogonal (P2) étant perpendiculaire au plan principal (P1) et passant par un axe de variation de pas (AXPAS) de la pale.

9. Rotor selon l'une quelconque des revendications 7 à 8,
**caractérisé en ce que** le point de courbure maximale (PC0) étant situé à une distance verticale (DV) du plan principal (P1), ladite distance verticale (DV) est comprise entre le tiers d'une corde de référence (CREF) et trois fois cette corde de référence (CREF).

**10.** Rotor selon la revendication 9,
**caractérisé en ce que**, ledit point de courbure maximal (PCO) étant contenu dans une section maximale (36) de la pale, ladite corde de référence est la corde de cette section maximale.

**11.** Rotor selon l'une quelconque des revendications 1 à 10, **caractérisé en ce que** ladite zone d'emplanture (30) s'étend radialement en envergure de ladite section d'emplanture (31) vers une première section intermédiaire (32) commune à la zone d'emplanture (30) et à la zone bombée (35), ladite première section intermédiaire (32) étant disposée radialement entre la section d'emplanture (31) et une section médiane (37) de la pale située à égale distance de la section d'emplanture (31) et de la section d'extrémité libre (41).

**12.** Rotor selon la revendication 2,
**caractérisé en ce que** ladite zone d'extrémité (40) s'étend radialement en envergure d'une deuxième section intermédiaire (39) commun à la zone d'extrémité (40) et à la zone bombée (35) vers ladite section d'extrémité libre (41), ladite deuxième section intermédiaire (39) étant disposée radialement entre la section d'extrémité libre (41) et une section médiane (37) de la pale située à égale distance de la section d'emplanture (31) et de la section d'extrémité libre (41).

**13.** Aéronef (1),
**caractérisé en ce qu'**il comporte un rotor (5) selon l'une quelconque des revendications 1 à 12.

**14.** Procédé pour minimiser le bruit émis par un rotor (5), ledit rotor (5) comprenant un moyeu (16) tournant portant une pluralité de pales (20), le rotor comportant une carène (6) définissant une veine (7) dans laquelle évoluent lesdites pales (20), ledit rotor comprenant un stator-redresseur (10) situé en aval desdites pales (20),
**caractérisé en ce que** chaque pale (20) comportant un extrados (21) et un intrados (22) s'étendant transversalement d'un bord d'attaque (23) vers un bord de fuite (24) et en envergure d'une section d'emplanture (31) vers une section d'extrémité libre (41), la pale comportant de la section d'emplanture (31) vers la section d'extrémité libre (41) une zone d'emplanture (30) puis une zone bombée (35), ladite zone d'emplanture (30) étant contenue dans un plan principal (P1) de rotation, on bombe un intrados (22") et un extrados (21") de ladite zone bombée du bord d'attaque (23) vers le bord de fuite (24) selon une direction parallèle à l'axe de rotation de ladite pale et selon un sens opposé à un sens de circulation du fluide au travers du rotor pour l'éloigner dudit stator-redresseur (10) afin de minimiser le bruit émis par le rotor.

**15.** Procédé selon la revendication 14,
**caractérisée en ce que**, chaque zone présentant une pluralité de sections réparties en envergure le long d'une ligne d'empilement (50), une portion d'emplanture (55) de la ligne d'empilement (50) située dans la zone d'emplanture (30), la portion intermédiaire de la ligne d'empilement située dans la zone bombée étant bombée, on réalise ladite portion intermédiaire (35) à l'aide d'une fonction spline cubique formée en utilisant au moins trois points de passage (100), un premier point de passage étant commun à la portion d'emplanture et à la portion intermédiaire.

**Patentansprüche**

**1.** Rotor (5) mit einer sich drehenden Nabe (16), die eine Mehrzahl von Rotorblättern (20) trägt, wobei der Rotor eine Verkleidung (6) aufweist, die einen Durchgang (7) definiert, in dem sich die Rotorblätter (20) drehen, wobei der Rotor einen Abricht-Stator (10) aufweist, der stromab bezüglich der Rotorblätter (20) gelegen ist, wobei jedes Rotorblatt (20) eine Saugseite (21) und eine Druckseite (22) aufweist, die sich quer von einer Vorderkante (23) zu einer Hinterkante (24) erstrecken und in Spannweitenrichtung von einem Fußabschnitt (31) zu einem freien Endabschnitt (41),
**dadurch gekennzeichnet, dass** jedes Rotorblatt (20) in Spannweitenrichtung von dem Fußabschnitt (31) zu dem freien Endabschnitt (41) einen Fußbereich (30) und darauffolgend einen einzigen gewölbten Bereich (35) aufweist, der sich quer von der Vorderkante (23) zu der Hinterkante (24) erstreckt, wobei der Fußbereich (30) in einer Hauptrotationsebene (P1) enthalten ist, wobei der gewölbte Bereich (35) eine Druckseite (22") und eine Saugseite (21") aufweist, die von der Vorderkante (23) zu der Hinterkante (24) gewölbt sind und sich ausgehend von dem Fußbereich der Hauptebene (P1) in eine Richtung (Z) parallel zur Drehachse (AXROT) des Rotorblatts und in eine Richtung entgegen einer Strömungsrichtung eines Fluids durch das Rotorblatt bis zu einem Punkt maximaler Krümmung (PCO) erstrecken und sich dann der Hauptebene (P1) annähern, wobei sich der gewölbte Bereich von der Hauptebene (P1) entfernt, um den Punkt maximaler Krümmung von dem Abricht-Stator (10) fernzuhalten.

**2.** Rotor nach Anspruch 1,
**dadurch gekennzeichnet, dass** der gewölbte Bereich (35) sich ausgehend von dem Fußbereich von der Hauptebene (P1) entfernt und sich dann dieser annähert, wobei jedes Rotorblatt (20) ausgehend von der Hauptebene (P1) einen Endbereich (40) aufweist, der auf den gewölbten Bereich folgt, wobei der Endbereich den freien End-abschnitt (41) umfasst.

**3.** Rotor nach Anspruch 2, **dadurch gekennzeichnet, dass** der Fußbereich und der Endbereich (40) in der Hauptebene (P1) angeordnet sind.

**4.** Rotor nach Anspruch 2, **dadurch gekennzeichnet, dass** jedes Rotorblatt (20) eine Mehrzahl von Abschnitten aufweist, die in Spannweitenrichtung entlang einer Konstruktionslinie (50) dieses Rotorblatts (20) verteilt sind, einen Fußteil (55) der Konstruktionslinie (50), der in dem Fußbereich (30) gelegen ist, und einen Endteil (65) der Konstruktionslinie (50), der in dem Endbereich (40) gelegen ist, die in der Hauptebene (P1) angeordnet sind, wobei ein Zwischenteil (60) der Konstruktionslinie (50), der in dem gewölbten Bereich (35) angeordnet ist, gewölbt ist, um sich von der Hauptebene (P1) in eine Richtung parallel zur Drehachse des Rotorblatts zu entfernen.

**5.** Rotor nach Anspruch 4, **dadurch gekennzeichnet, dass** eine Projektion (60') des Zwischenteils (60) auf eine senkrechte Ebene (P2) die Form einer kubischen Splinefunktion hat, wobei diese senkrechte Ebene (P2) senkrecht zu der Hauptebene (P1) verläuft und durch eine Achse der Neigungswinkelverstellung (AXPAS) des Rotorblatts verläuft.

**6.** Rotor nach einem der Ansprüche 4 bis 5, **dadurch gekennzeichnet, dass** für jedes Rotorblatt eine Projektion (55', 65') des Fußteiles (55) und des Endteils (65) auf eine orthogonale Ebene (P2) mit einer Achse der Neigungswinkelverstellung (AXPAS) des Rotorblatts auf dieser orthogonalen Ebene zusammenfällt, wobei diese orthogonale Ebene senkrecht zur Hauptebene (P1) verläuft und durch eine Achse der Neigungswinkelverstellung (AXPAS) des Rotorblatts geht.

**7.** Rotor nach einem der Ansprüche 1 bis 6, **dadurch gekennzeichnet, dass** der Punkt maximaler Krümmung (PCO) sich in einer Nebenebene (P3) stromauf bezüglich der Hauptebene (P1) und parallel zur Hauptebene (P1) befindet.

**8.** Rotor nach Anspruch 7, **dadurch gekennzeichnet, dass** für jedes Rotorblatt eine Projektion (PCO') des Punktes maximaler Krümmung (PCO) auf eine orthogonale Ebene (P2) in einem radialen Abstand (DR) von dem Fußabschnitt (31) angeordnet ist, der zwischen einem Viertel der Spannweite (R) des Rotorblatts, die den Fußabschnitt (31) von dem freien Endabschnitt (41) trennt, und Dreiviertel dieser Spannweite (R) liegt, wobei diese orthogonale Ebene (P2) senkrecht zu der Hauptebene (P1) verläuft und durch eine Achse der Neigungswinkelverstellung (AXPAS) des Rotorblatts verläuft.

**9.** Rotor nach einem der Ansprüche 7 bis 8, **dadurch gekennzeichnet, dass** der Punkt maximaler Krümmung (PCO) in einem vertikalen Abstand (DV) von der Hauptebene (P1) angeordnet ist, wobei der vertikale Abstand (DV) zwischen einem Drittel einer Referenzbreite (CREF) und dem Dreifachen dieser Referenzbreite (CREF) liegt.

**10.** Rotor nach Anspruch 9, **dadurch gekennzeichnet, dass** der Punkt größter Krümmung (PCO) in einem maximalen Abschnitt (36) des Rotorblatts gelegen ist, wobei die Referenzbreite die Breite in diesem maximalen Abschnitt ist.

**11.** Rotor nach einem der Ansprüche 1 bis 10, **dadurch gekennzeichnet, dass** der Fußbereich (30) sich radial in Spannweitenrichtung von dem Fußabschnitt (31) zu einem ersten Zwischenabschnitt (32) erstreckt, der zu dem Fußbereich (30) und zu dem gewölbten Bereich (35) gehört, wobei der erste Zwischenabschnitt (32) radial zwischen dem Fußabschnitt (31) und einem mittleren Abschnitt (37) des Rotorblatts angeordnet ist, der im gleichen Abstand von dem Fußabschnitt (31) und dem freien Endabschnitt (41) gelegen ist.

**12.** Rotor nach Anspruch 2, **dadurch gekennzeichnet, dass** der Endbereich (40) sich radial in Spannweitenrichtung von einem zweiten Zwischenabschnitt (39), der dem Endbereich (40) und dem gewölbten Bereich (35) gemeinsam ist, zu dem freien Endabschnitt (41) erstreckt, wobei der zweite Zwischenabschnitt (39) radial zwischen dem freien Endabschnitt (41) und einem mittleren Abschnitt (37) des Rotorblatts angeordnet ist, der im gleichen Abstand von dem Fußabschnitt (31) und dem freien Endabschnitt (41) gelegen ist.

**13.** Luftfahrzeug (1), **dadurch gekennzeichnet, dass** es einen Rotor (5) gemäß einem der Ansprüche 1 bis 12 aufweist.

**14.** Verfahren zur Minimierung des von einem Rotor (5) abgegebenen Lärms, wobei der Rotor (5) eine sich drehende Nabe (16) aufweist, die eine Mehrzahl von Rotorblättern (20) trägt, wobei der Rotor eine Verkleidung (6) aufweist, die einen Durchgang (7) definiert, in dem sich die Rotorblätter (20) drehen, wobei der Rotor einen Abricht-Stator (10) aufweist, der stromab bezüglich der Rotorblätter (20) gelegen ist, **dadurch gekennzeichnet, dass** jedes Rotorblatt (20) eine Saugseite (21) und eine Druckseite (22) aufweist, die sich quer von einer Vorderkante (23) zu einer Hinterkante (24) und in Spannweitenrichtung von einem Fußabschnitt (31) zu einem freien Endabschnitt (41) erstrecken, wobei das Rotorblatt von dem Fußabschnitt (31) zu dem freien Endabschnitt (41) einen Fußbereich (30) und dann einen gewölbten Bereich (35) aufweist, wobei der Fußbereich (30) in einer Hauptrotationsebene (P1) enthalten ist, eine Druckseite (22") und eine Saugseite (21") des gewölbten Bereichs von der Vorderkante (23) bis zu der Hinterkante (24) gewölbt wird in eine Richtung, die parallel zu einer Drehachse des Rotorblatts und entgegen der Richtung der Strömung des Fluids durch den Rotor gekrümmt wird, um diesen von dem Abricht-Stator (10) zu beabstanden, um den von dem Rotor abgegebenen Lärm zu minimieren.

**15.** Verfahren nach Anspruch 14, **dadurch gekennzeichnet, dass** jeder Bereich eine Mehrzahl von Abschnitten aufweist, die in Spannweitenrichtung entlang einer Konstruktionslinie (50) angeordnet sind, einen Fußteil (55) der Konstruktionslinie (50), die in dem Fußbereich (30) gelegen ist, wobei der Zwischenteil der Konstruktionslinie, die in dem gewölbten Bereich gelegen ist, gewölbt ist, der Zwischenteil (35) mit Hilfe einer kubischen Splinefunktion konstruiert wird unter Verwendung mindestens dreier Durchgangspunkte (100), wobei ein erster Durchgangspunkt dem Fußabschnitt und dem Zwischenabschnitt gemeinsam ist.

## Claims

**1.** Rotor (5) comprising a rotary hub (16) carrying a plurality of blades (20), the rotor comprising a fairing (6) defining a duct (7) in which said blades (20) rotate, said rotor comprising a straightening stator (10) situated downstream from said blades (20), each blade (20) comprising an upper surface (21) and a lower surface (22) extending transversely from a leading edge (23) towards a trailing edge (24) and spanwise from a root section (31) towards a free end section (41),
**characterised in that** each blade (20) comprises spanwise from the root section (31) towards said free end section (41) a root zone (30) then a single rounded zone (35) extending transversely from the leading edge (23) towards the trailing edge (24), said root zone (30) being contained in a main plane of rotation (P1), said rounded zone (35) having a rounded lower surface (22") and a rounded upper surface (21") from the leading edge (23) towards the trailing edge (24) and, starting from the root zone, departing from said main plane (P1) in a direction (Z) parallel to the axis of rotation (AXROT) of said blade and in a direction opposite to a flow direction of a fluid through the blade as far as a point of maximum curvature (PCO), then comes closer to said main plane (P1), said rounded zone departing from the main plane (P1) so as to move said point of maximum curvature farther away from said straightening stator (10).

**2.** Rotor according to claim 1,
**characterised in that**, starting from the root zone, said rounded zone (35) departing from said main plane (P1) then moving closer thereto, each blade (20) has, starting from said main plane (P1), an end zone (40) following on from the rounded zone, said end zone comprising said free end section (41).

**3.** Rotor according to claim 2,
**characterised in that**, said root zone and said end zone (40) are arranged in said main plane (P1).

**4.** Rotor according to claim 2,
**characterised in that** each blade (20) having a plurality of sections distributed spanwise along a stacking line (50) of the blade (20), a root portion (55) of the stacking line (50) situated in the root zone (30) and an end portion (65) of the stacking line (50) situated in the end zone (40) are arranged in said main plane (P1), an intermediate portion (60) of the stacking line (50) situated in the rounded zone (35) being rounded to depart from said main plane (P1) in a direction parallel to the axis of rotation of said blade.

**5.** Rotor according to claim 4,
**characterised in that** a projection (60') of said intermediate portion (60) onto an orthogonal plane (P2) has the shape of a cubic spline function, the orthogonal plane (P2) being perpendicular to the main plane (P1) and passing through a pitch variation axis (AXPAS) of the blade.

**6.** Rotor according to any one of claims 4 to 5,
**characterised in that**, for each blade, a projection (55', 65') of the root portion (55) and of the end portion (65) onto an orthogonal plane (P2) coincide with a pitch variation axis (AXPAS) of the blade onto the orthogonal plane, the orthogonal plane (P2) being perpendicular to the main plane (P1) and passing through a pitch variation axis (AXPAS) of the blade.

**7.** Rotor according to any one of claims 1 to 6,
**characterised in that** said point of maximum curvature (PCO) lies in a secondary plane (P3) upstream from said main plane (P1) and parallel to the main plane (P1).

**8.** Rotor according to claim 7,
**characterised in that**, for each blade, a projection (PCO') of the point of maximum curvature (PCO) onto an orthogonal plane (P2) is situated at a radial distance (DR) from said root section (31) of between one-quarter of the span (R) of the blade separating the root section (31) from the free end section (41) and three-quarters of said span (R), the orthogonal plane (P2) being perpendicular to the main plane (P1) and passing through a pitch variation axis (AXPAS) of the blade.

**9.** Rotor according to any one of claims 7 to 8, **characterised in that** the point of maximum curvature (PCO) being situated at a vertical distance (DV) from the main plane (P1), said vertical distance (DV) is between one-third of a reference chord (CREF) and three times the reference chord (CREF).

**10.** Rotor according to claim 9, **characterised in that**, said point of maximum curvature (PCO) being contained in a maximum section (36) of the blade, said reference chord is the chord of the maximum section.

**11.** Rotor according to any one of claims 1 to 10, **characterised in that** said root zone (30) extends radially spanwise from said root section (31) towards a first intermediate section (32) common to the root zone (30) and to the rounded zone (35), said first intermediate section (32) being arranged radially between the root section (31) and a middle section (37) of the blade situated at equal distance from the root section (31) and from the free end section (41).

**12.** Rotor according to claim 2, **characterised in that** said end zone (40) extends radially spanwise from a second intermediate section (39) common to the end zone (40) and to the rounded zone (35) towards said free end section (41), said second intermediate section (39) being arranged radially between the free end section (41) and a middle section (37) of the blade situated at equal distance from the root section (31) and from the free end section (41).

**13.** Aircraft (1), **characterised in that** it comprises a rotor (5) according to any one of claims 1 to 12.

**14.** Method for minimising the noise emitted by a rotor (5), said rotor (5) comprising a rotary hub (16) carrying a plurality of blades (20), the rotor comprising a fairing (6) defining a duct (7) in which said blades (20) rotate, said rotor comprising a straightening stator (10) situated downstream from said blades (20), **characterised in that** each blade (20) comprising an upper surface (21) and a lower surface (22) extending transversely from a leading edge (23) towards a trailing edge (24) and spanwise from a root section (31) towards a free end section (41), the blade comprising from the root section (31) towards the free end section (41) a root zone (30) then a rounded zone (35), said root zone (30) being contained in a main plane of rotation (P1), a lower surface (22") and an upper surface (21") of said rounded zone are rounded from the leading edge (23) towards the trailing edge (24) in a direction parallel to the axis of rotation of said blade and in a direction opposite to a flow direction of the fluid through the rotor in order to move it farther away from said straightening stator (10) in order to minimise the noise emitted by the rotor.

**15.** Method according to claim 14, **characterised in that**, each zone having a plurality of sections distributed spanwise along a stacking line (50), a root portion (55) of the stacking line (50) situated in the root zone (30), the intermediate portion of the stacking line situated in the rounded zone being rounded, said intermediate portion (35) is made with the aid of a cubic spline function formed by using at least three passage points (100), a first passage point being common to the root portion and to the intermediate portion.

Fig.1

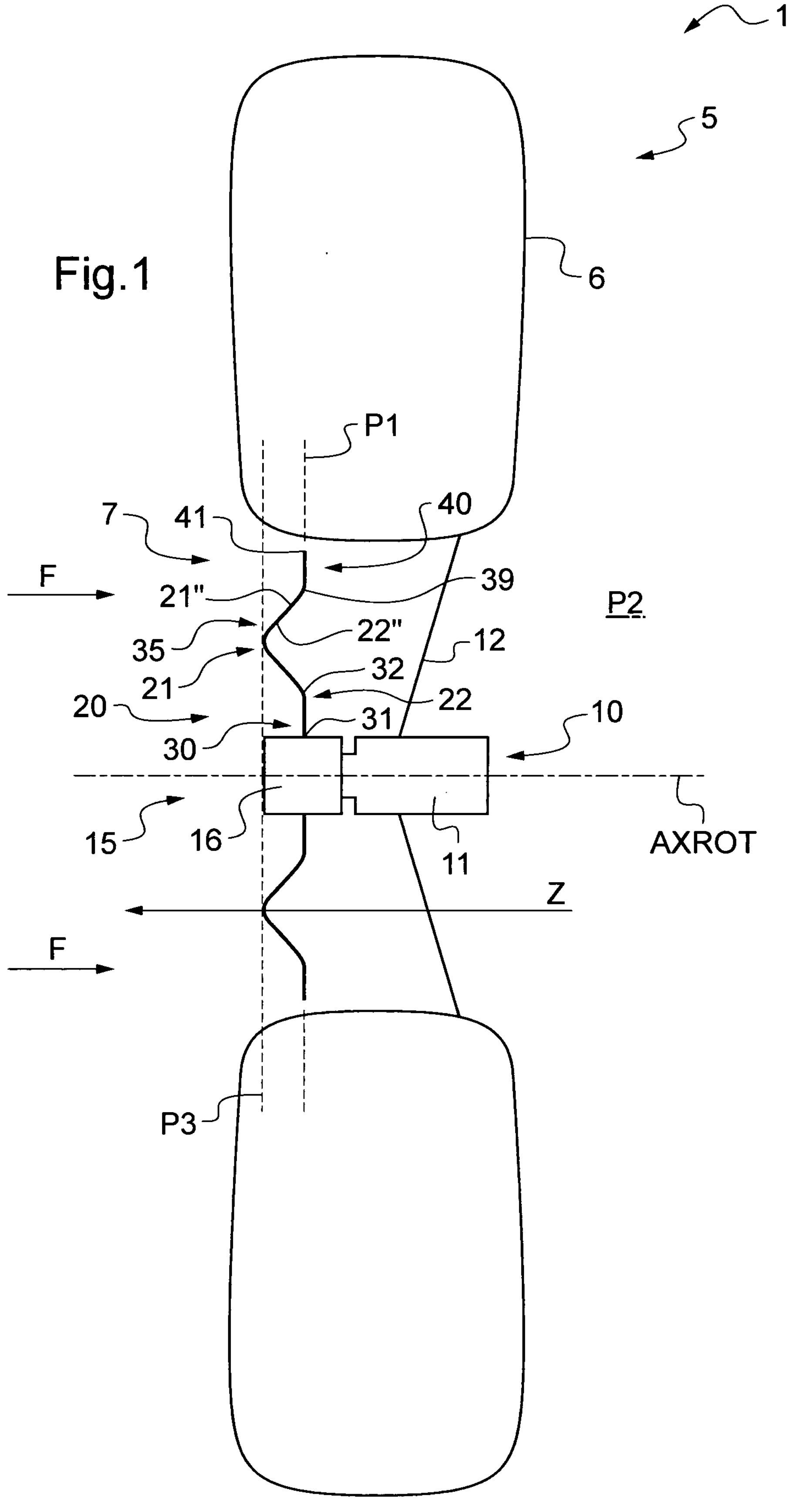
1
5
6
P1
7
41
40
F
21"
39
P2
22"
35
12
32
21
22
20
10
31
30
AXROT
15
16
11
Z
F
P3

Fig.2

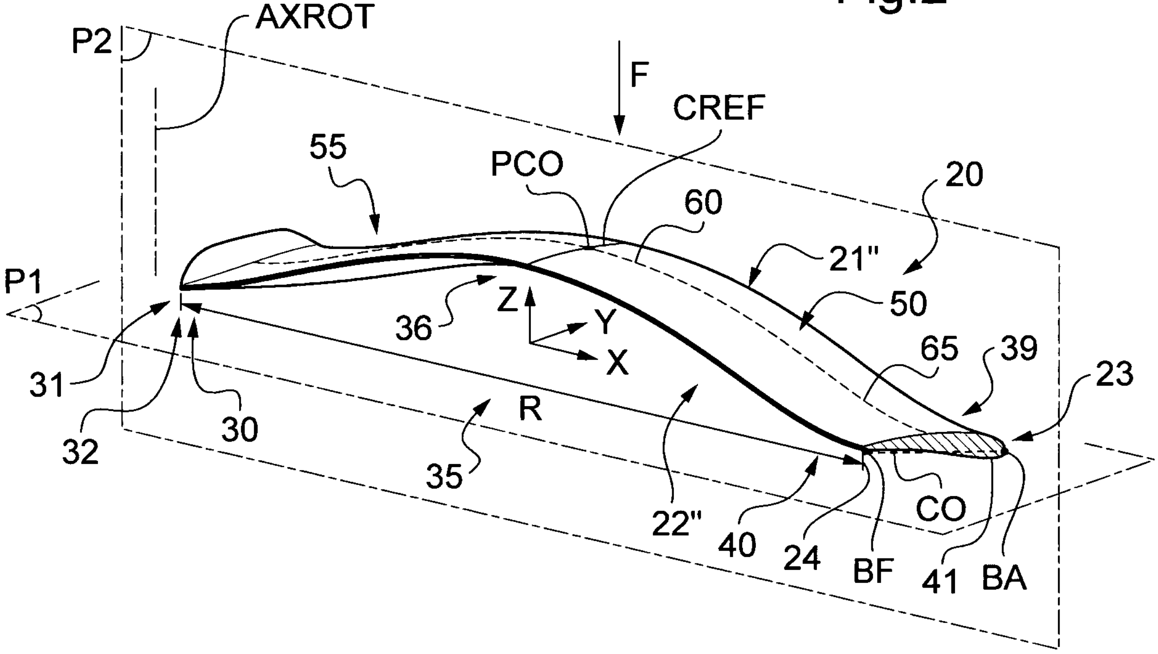
AXROT
P2
F
CREF
55
PCO
60
20
21"
P1
Z
Y
36
50
X
65
39
23
31
30
R
32
35
22"
40
24
CO
BF
41
BA

Fig.3

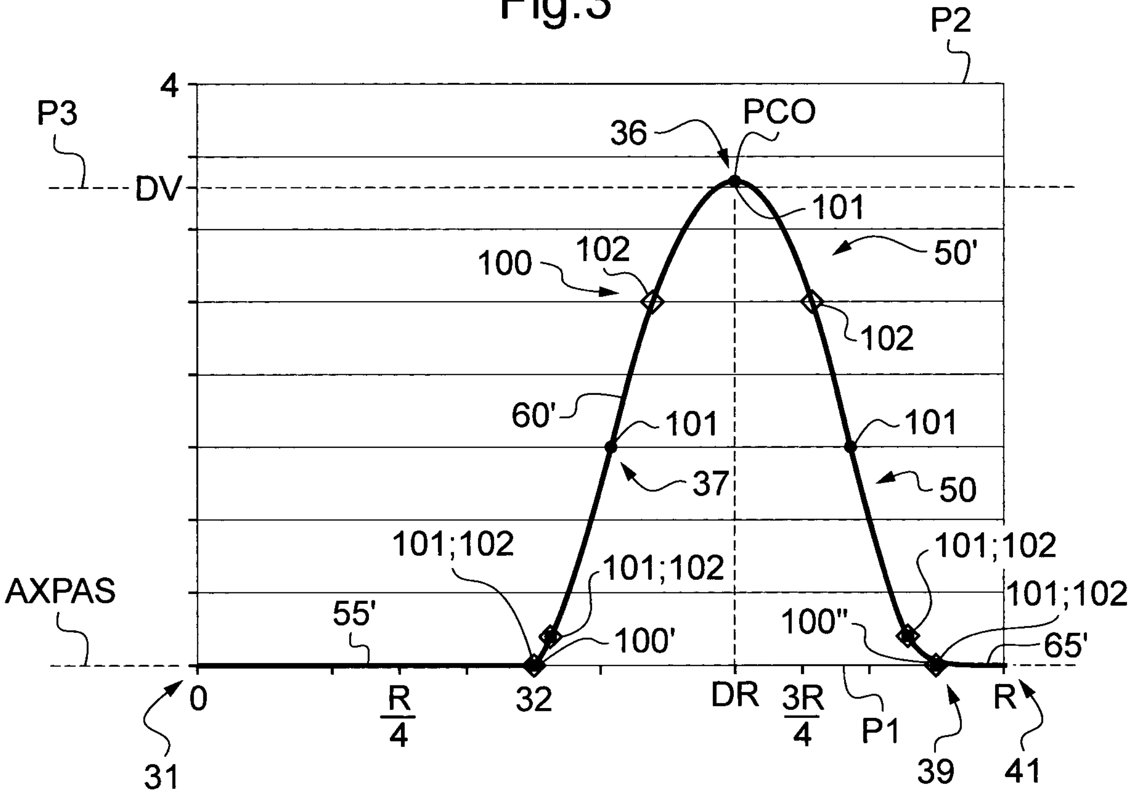
P2
4
P3
36
PCO
DV
101
100
102
50'
102
60'
101
101
37
50
101;102
101;102
101;102
AXPAS
101;102
55'
100"
100'
65'
0
R/4
32
DR
3R/4
P1
R
31
39
41

Fig.6

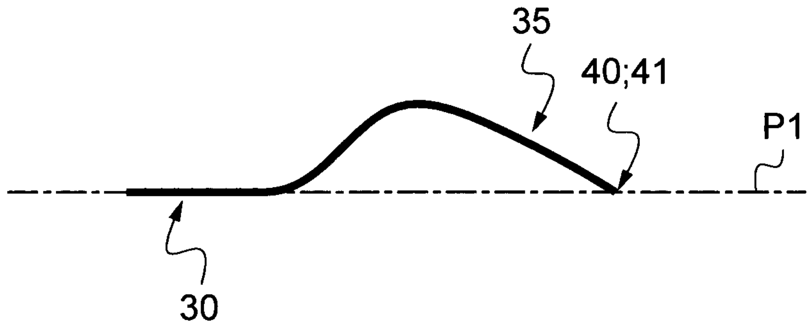


Fig.5

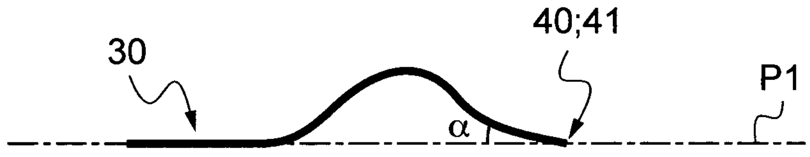


Fig.4

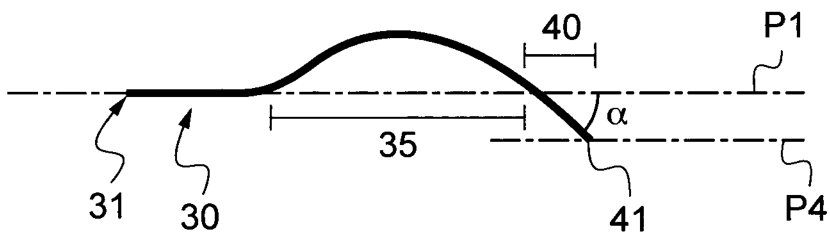


Fig.7

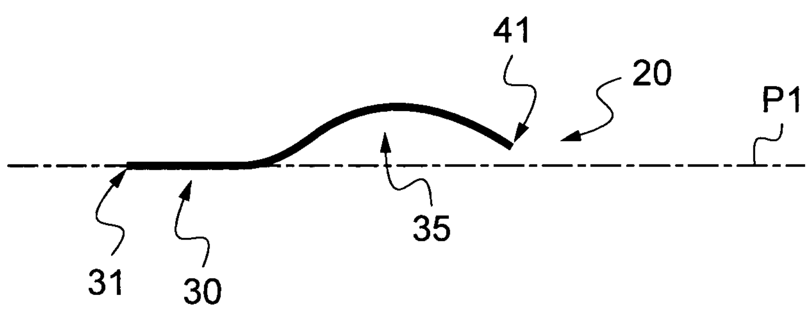

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2719549
- FR 2719552
- FR 823433
- US 7874513 B
- US 2007201982 A
- FR 1134736
- EP 2336022 A
- US 1949611 A